# EUROPEAN PATENT SPECIFICATION

(11) **EP 3 004 246 B1**
(45) Date of publication and mention of the grant of the patent: **26.06.2019**
(21) Application number: 14803640.3
(22) Date of filing: 21.05.2014
(51) Int. Cl.: C08L 71/12, H01M 2/10, C08K 5/521, C08K 7/14, C08L 25/10

(54) **POLY(PHENYLENE ETHER) COMPOSITION AND ARTICLE**
POLY(PHENYLENETHER)-ZUSAMMENSETZUNG UND ARTIKEL
COMPOSITION DE POLY(PHÉNYLÈNE ÉTHER) ET ARTICLE

(30) Priority: 30.05.2013 US 201361828986 P; 20.05.2014 US 201414282010
(43) Date of publication of application: 13.04.2016
(73) Proprietor: SABIC Global Technologies B.V., 4612 PX Bergen op Zoom (NL)
(72) Inventor: LEVASALMI, Juha-Matti, Selkirk, New York 12158 (US)
(74) Representative: Lang, Johannes
(86) International application number: PCT/US2014/038877
(87) International publication number: WO 2014/193705

(56) References cited:
- WO-A1-00/17272
- WO-A1-93/04119
- WO-A1-93/04119
- US-A- 5 268 403
- US-A1- 2003 018 134
- US-A1- 2004 116 583
- US-A1- 2005 004 281
- US-A1- 2009 275 684

## Description

### BACKGROUND OF THE INVENTION

The batteries of hybrid and electric vehicles are commonly encased in a protective housing that is distinct from the case enclosing the battery itself. The protective housing provides impact resistance and dimensional stability within the assembled battery module. In order to meet these performance requirements, the walls of the protective housing are typically molded from two different plastics: parts with molded-in metal bosses are molded from a glass-filled plastic to reduce cracking around the metal bosses, and parts without molded-in metal bosses are molded from an unfilled plastic to dissipate impact energy. The impact resistance of a battery module can be measured in a test in which a fully assembled battery module is dropped from a predetermined height onto a hard surface, then assessed for impact-related damage. Current protective housings are able to provide adequate protection when the battery module is dropped from a height of thirty centimeters, but fail when dropped from greater heights. There is a desire for injection molding materials that will provide improved protection as manifested by improved performance in a battery module drop test from greater than thirty centimeters. There is also a desire to reduce the number of plastic materials required to mold the parts of the protective housing.

US 2009/275684 discloses a thermoplastic composition comprising a poly(arylene ether); a poly(alkenyl aromatic) resin, an organophosphate ester flame retardant, and tricalcium phosphate. In Example 2 of US 2009/275684, the composition includes 52.3 weight percent of a poly(phenylene ether), 21.8 weight percent of a high impact polystyrene (HIPS), 5.7 weight percent of an organophosphate ester, and 6.0 weight percent of Type E glass fibers having an average filament diameter of 14 micrometers. WO 93/04119 refers to thermoplastic compositions and discloses a composition comprising 56 parts by weight of a poly(phenylene ether), 31.5 parts by weight of polystyrene, 12.5 parts by weight of an organophosphate ester (RDP), and 10.0 weight percent of glass fibers.

### BRIEF SUMMARY OF EMBODIMENTS OF THE INVENTION

The invention discloses an injection molded component of a protective housing for a battery system of a hybrid or electric vehicle, wherein the injection molded component comprises a composition comprising: 45 to 55 weight percent of a poly(phenylene ether); 30 to 40 weight percent of a rubber-modified polystyrene comprising 80 to 96 parts by weight of polystyrene and 4 to 20 parts by weight polybutadiene per 100 parts by weight of the rubber-modified polystyrene; 5 to 15 weight percent of an organophosphate ester; and 5 to 10 weight percent glass fibers having a diameter of 5 to 15 micrometers, and a softening point of 600 to 900 °C determined according to ASTM C338-93(2008); wherein all weight percents are based on the total weight of the composition; and wherein the composition excludes organic sulfonates of the formula RSO₃M, wherein R is a C₅-C₂₅ hydrocarbyl, and M is an alkali metal.

These and other embodiments are described in detail below.

### BRIEF DESCRIPTION OF THE DRAWING

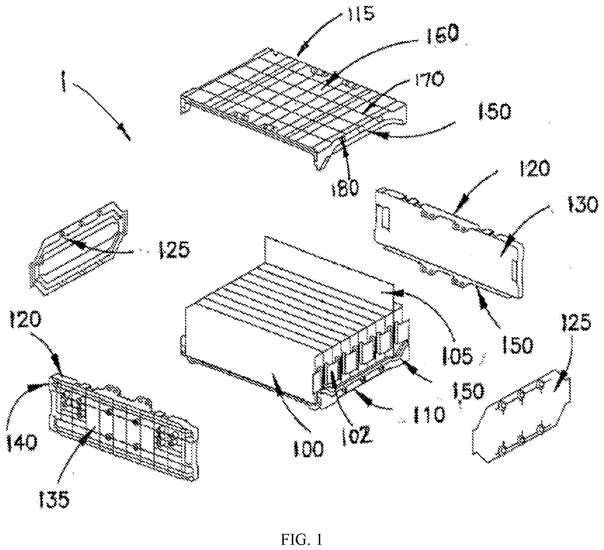

Figure 1 is an exploded view of a battery module with a protective housing.

### DETAILED DESCRIPTION OF THE INVENTION

The present inventors have determined that the impact resistance of a hybrid or electric vehicle battery module can be substantially improved when the protective housing of the battery module is molded from a specific poly(phenylene ether) composition. Moreover, this improvement is achieved when using the same poly(phenylene ether) composition to mold protective housing components with and without molded-in metal bosses.

The composition comprises: 45 to 55 weight percent of a poly(phenylene ether); 30 to 40 weight percent of a rubber-modified polystyrene comprising 80 to 96 parts by weight of polystyrene and 4 to 20 parts by weight polybutadiene per 100 parts by weight of the rubber-modified polystyrene; 5 to 15 weight percent of an organophosphate ester; and 5 to 10 weight percent glass fibers having a diameter of 5 to 15 micrometers, and a softening point of 600 to 900 °C determined according to ASTM C338-93(2008); wherein all weight percents are based on the total weight of the composition; and wherein the composition excludes organic sulfonates of the formula RSO₃M, wherein R is a C₅-C₂₅ hydrocarbyl, and M is an alkali metal.

The composition comprises a poly(phenylene ether). Suitable poly(phenylene ether)s include those comprising repeating structural units having the formula 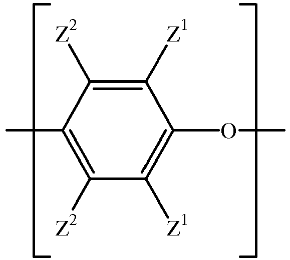 wherein each occurrence of Z¹ is independently halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms; and each occurrence of Z² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a din-butylaminomethyl group formed by reaction of a terminal 3,5-dimethyl-1,4-phenyl group with the di-n-butylamine component of an oxidative polymerization catalyst.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, more specifically 0.35 to 0.5 deciliter per gram, even more specifically 0.4 to 0.5 deciliter per gram.

In some embodiments, the poly(phenylene ether) is essentially free of incorporated diphenoquinone residues. In the context, "essentially free" means that less than 1 weight percent of poly(phenylene ether) molecules comprise the residue of a diphenoquinone. As described in U.S. Patent No. 3,306,874 to Hay, synthesis of poly(phenylene ether) by oxidative polymerization of monohydric phenol yields not only the desired poly(phenylene ether) but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(phenylene ether) (i.e., the diphenoquinone is incorporated into the poly(phenylene ether) structure) by heating the polymerization reaction mixture to yield a poly(phenylene ether) comprising terminal or internal diphenoquinone residues). For example, when a poly(phenylene ether) is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(phenylene ether) with terminal and internal residues of incorporated diphenoquinone. However, such reequilibration reduces the molecular weight of the poly(phenylene ether). Accordingly, when a higher molecular weight poly(phenylene ether) is desired, it may be desirable to separate the diphenoquinone from the poly(phenylene ether) rather than reequilibrating the diphenoquinone into the poly(phenylene ether) chains. Such a separation can be achieved, for example, by precipitation of the poly(phenylene ether) in a solvent or solvent mixture in which the poly(phenylene ether) is insoluble and the diphenoquinone is soluble. For example, when a poly(phenylene ether) is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with 1 to 4 volumes of methanol or a methanol/water mixture. Alternatively, the amount of diphenoquinone side-product generated during oxidative polymerization can be minimized (e.g., by initiating oxidative polymerization in the presence of less than 10 weight percent of the monohydric phenol and adding at least 95 weight percent of the monohydric phenol over the course of at least 50 minutes), and/or the reequilibration of the diphenoquinone into the poly(phenylene ether) chain can be minimized (e.g., by isolating the poly(phenylene ether) no more than 200 minutes after termination of oxidative polymerization). These approaches are described in U.S. Patent No. 8,025,158 to Delsman et al. In an alternative approach utilizing the temperature-dependent solubility of diphenoquinone in toluene, a toluene solution containing diphenoquinone and poly(phenylene ether) can be adjusted to a temperature of 25°C, at which diphenoquinone is poorly soluble but the poly(phenylene ether) is soluble, and the insoluble diphenoquinone can be removed by solid-liquid separation (e.g., filtration).

In some embodiments, the poly(phenylene ether) comprises 2,6-dimethyl-1,4-phenylene ether units, 2,3,6-trimethyl-1,4-phenylene ether units, or a combination thereof. In some embodiments, the poly(phenylene ether) comprises a poly(2,6-dimethyl-1,4-phenylene ether). In some embodiments, the poly(phenylene ether) comprises a poly(2,6-dimethyl-1,4-phenylene ether) having an intrinsic viscosity of 0.35 to 0.5 deciliter per gram, specifically 0.4 to 0.5 deciliter per gram, measured by Ubbelohde viscometer at 25°C in chloroform.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

The composition comprises the poly(phenylene ether) in an amount of 45 to 55 weight percent, based on the total weight of the composition. Within this range, the poly(phenylene ether) amount can be 48 to 54 weight percent.

In addition to the poly(phenylene ether), the composition comprises a rubber-modified polystyrene. The rubber-modified polystyrene comprises polystyrene and polybutadiene. Rubber-modified polystyrenes are sometimes referred to as "high-impact polystyrenes" or "HIPS". The rubber-modified polystyrene comprises 80 to 96 parts by weight percent polystyrene and 4 to 20 parts by weight polybutadiene, based on 100 parts by weight of the rubber-modified polystyrene. Within these ranges, the rubber-modified polystyrene can comprise 85 to 95 parts by weight polystyrene and 5 to 15 parts by weight percent polybutadiene. In some embodiments, the rubber-modified polystyrene has an effective gel content of 10 to 35 percent. Suitable rubber-modified polystyrenes are commercially available as, for example, NORYL™ HIPS3190 from SABIC Innovative Plastics, or EC-2100 from Chevron Phillips Chemical Company.

The composition comprises the rubber-modified polystyrene in an amount of 30 to 40 weight percent, based on the total weight of the composition. Within this range, the rubber-modified polystyrene amount can be 30 to 37 weight percent.

In addition to the poly(phenylene ether) and the rubber-modified polystyrene, the composition comprises an organophosphate ester. Exemplary organophosphate ester flame retardants include phosphate esters comprising phenyl groups, substituted phenyl groups, or a combination of phenyl groups and substituted phenyl groups, bis(aryl phosphate) esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof.

In some embodiments the organophosphate ester comprises a bis(aryl phosphate) having the formula 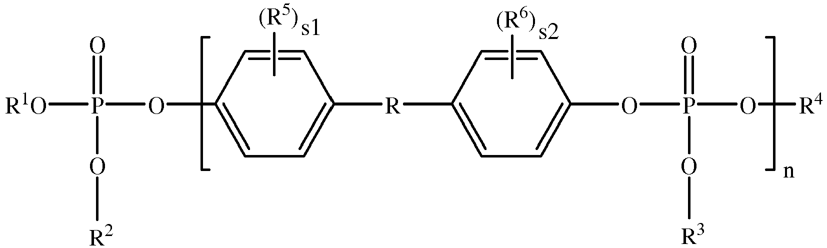 wherein R is independently at each occurrence a C₁-C₁₂ alkylene group; R⁵ and R⁶ are independently at each occurrence a C₁-C₅ alkyl group; R¹, R², and R⁴ are independently a C₁-C₁₂ hydrocarbyl group; R³ is independently at each occurrence a C₁-C₁₂ hydrocarbyl group; n is 1 to 25; and s1 and s2 are independently an integer equal to 0, 1, or 2. In some embodiments OR¹, OR², OR³ and OR⁴ are independently derived from phenol, a monoalkylphenol, a dialkylphenol, or a trialkylphenol.

As readily appreciated by one of ordinary skill in the art, the bis(aryl phosphate) is derived from a bisphenol. Exemplary bisphenols include 2,2-bis(4-hydroxyphenyl)propane (bisphenol A), 2,2-bis(4-hydroxy-3-methylphenyl)propane, bis(4-hydroxyphenyl)methane, bis(4-hydroxy-3,5-dimethylphenyl)methane and 1,1-bis(4-hydroxyphenyl)ethane. In some embodiments, the bisphenol comprises bisphenol A.

In some embodiments, the organophosphate ester comprises triphenyl phosphate, an alkylated triphenyl phosphate (e.g., t-butylphenyl diphenyl phosphates, bis(t-butylphenyl) phenyl phosphates, tris(t-butylphenyl) phosphates, and combinations thereof), or a combination thereof.

The composition comprises the organophosphate ester in an amount of 5 to 15 weight percent, based on the total weight of the composition. Within this range, the organophosphate ester amount can be 5 to 10 weight percent.

In addition to the poly(phenylene ether), the rubber-modified polystyrene, and the organophosphate ester, the composition comprises glass fibers. Suitable glass fibers include those based on E, R, and D glasses, as well as quartz. The glass fibers have a softening point of 600 to 900 °C determined according to ASTM C338-93(2008). The glass fibers have a diameter of 5 to 15 micrometers. In some embodiments, the length of the glass fibers before compounding is about 2 to about 7 millimeters, specifically about 3 to about 5 millimeters. The glass fibers can, optionally, include an adhesion promoter to improve their compatibility with the poly(phenylene ether) and the rubber-modified polystyrene. Adhesion promoters include chromium complexes, silanes, titanates, zirco-aluminates, propylene maleic anhydride copolymers, reactive cellulose esters and the like. Suitable glass fibers are commercially available from suppliers including, for example, Owens Corning, Nippon Electric Glass, PPG, Johns Manville, and Chongqing Polycomp International Corporation.

The composition comprises the glass fibers in an amount of 5 to 10 weight percent, based on the total weight of the composition. Within this range, the glass fiber amount can be 5 to 8 weight percent.

The composition can, optionally, further comprise one or more additives known in the thermoplastics art. For example, the composition can, optionally, further comprise stabilizers, mold release agents, lubricants, processing aids, drip retardants, dyes, pigments, antioxidants, mineral oil, metal deactivators, and combinations thereof. When present, such additives are typically used in a total amount of less than or equal to 5 weight percent, specifically less than or equal to 2 weight percent, more specifically less than or equal to 1 weight percent, based on the total weight of the composition.

The composition excludes organic sulfonates of the formula RSO₃M, wherein R is a C₅-C₂₅ hydrocarbyl, and M is an alkali metal. Other materials that can contribute to undesired increases in electrical conductivity can also be excluded.

The composition can, optionally, exclude polymers other than those described herein a required or optional. For example, the composition can exclude one or more of polyamides, polyesters, polyolefins, homopolystyrenes, and unhydrogenated or hydrogenated block copolymers of alkenyl aromatic monomers (e.g., styrene) and conjugated dienes (e.g., butadiene, isoprene).

The composition can, optionally, exclude flame retardants other than the organophosphate ester. For example, the composition can exclude one or more of metal dialkylphosphinates (such as aluminum tris(diethylphosphinate)), nitrogen-containing flame retardants (such as melamine phosphate, melamine pyrophosphate, melamine polyphosphate, and melamine cyanurate), and metal hydroxides (such as magnesium hydroxide, aluminum hydroxide, and cobalt hydroxide).

In a very specific embodiment, the composition consists of the poly(phenylene ether), the rubber-modified polystyrene, the organophosphate ester, and glass fibers, and, optionally, less than or equal to 5 weight percent of an additive selected from the group consisting of stabilizers, mold release agents, lubricants, processing aids, drip retardants, dyes, pigments, antioxidants, mineral oil, metal deactivators, and combinations thereof. The additive amount can be less than 2 weight percent, or less than 1 weight percent.

In another very specific embodiment, the poly(phenylene ether) comprises a poly(2,6-dimethyl-1,4-phenylene ether) having an intrinsic viscosity of 0.4 to 0.5 deciliter per gram, measured at 25 °C in chloroform; the rubber-modified polystyrene comprises 85 to 95 parts by weight of polystyrene and 5 to 15 parts by weight polybutadiene; the organophosphate ester comprises triphenyl phosphate; the glass fibers have a softening point of 600 to 900 °C; and the composition comprises 48 to 54 weight percent of the poly(phenylene ether), 30 to 37 weight percent of the rubber-modified polystyrene, 5 to 10 weight percent of the organophosphate ester, and 5 to 8 weight percent of the glass fibers.

The composition is useful to form articles. Suitable methods of forming such articles include single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used.

An injection molded article composition comprises: 45 to 55 weight percent of a poly(phenylene ether); 30 to 40 weight percent of a rubber-modified polystyrene comprising 80 to 96 parts by weight of polystyrene and 4 to 20 parts by weight polybutadiene per 100 parts by weight of the rubber-modified polystyrene; 5 to 15 weight percent of an organophosphate ester; and 5 to 10 weight percent glass fibers having a diameter of 5 to 15 micrometers, and a softening point of 600 to 900 °C determined according to ASTM C338-93(2008); wherein all weight percents are based on the total weight of the composition; and wherein the composition excludes organic sulfonates of the formula RSO₃M, wherein R is a C₅-C₂₅ hydrocarbyl, and M is an alkali metal.

The composition is used for molding components of a protective housing for a battery system of a hybrid or electric vehicle. Protective housings for the battery systems of hybrid and electric vehicles are known and described, for example, in U.S. Patent Application Publication Nos. US 2010/0021810 A1 and US 2009/0155679 A1 of Zhu et al., and International Patent Application Publication No. WO 2013/023524 A1 of Wang et al.

An exploded view of a battery module 1 is shown in Figure 1, which is adapted from Figure 24 of U.S. Patent Application Publication No. US 2010/0021810 A1 of Zhu et al. The battery cells 100 are connected with one another at their ends by connectors 102 and separated from each other on their sides via separator 105. Battery cells 100 are disposed between a protective housing bottom plate 110 and a protective housing top plate 115 to limit movement of the battery cells along the axis perpendicular to the bottom and top plates. Protective housing baffle structures 120 are disposed on each side of the group of battery cells 100 and oriented to traverse the length of the battery cells 100. The protective housing baffle structures 120 cooperate with one another to limit movement of the battery cells 100 along the axis perpendicular to the baffle structures. Protective housing side plates 125 are disposed at opposite ends of the battery cells 100 and extend along the width of the battery cell group. The side plates 125 limit motion of the battery cells 100 along the axis perpendicular to the side plates. The protective housing bottom plate 110, top plate 115, baffle structures 120, and side plates 125 can all be molded from the present composition, thereby reducing the number of materials required to fabricate the protective housing. Sealing elements 150 may be located between each baffle structure 120 and the top and bottom plates 115, 110 as well as between each side plate 125 and the top and bottom plates 115 and 110. In this manner, the top and bottom plates 115, 110 form water-tight seals with mating components.

Each baffle structure 120 comprises a baffle plate 130, a baffle stiffener 135, and apertures 140 disposed at the corners of the baffle structure 120. Apertures 140 are adapted to accept corresponding tension rods (not shown) that extend between the baffle structures 120 to secure the battery cells 100 therebetween. The total thickness of each baffle structure 120 may be, for example, 3 to 15 millimeters. The thickness of each baffle plate 130 may be, for example, 3 to 5 millimeters. The thickness of each baffle stiffener 135 may be, for example, 2 to 5 millimeters. Via holes may be pre-positioned to facilitate the use of mechanical fasteners, such as screws, at the four corners of the baffle structure 120. Such mechanical fastening is convenient for connecting the top and bottom plates 115 and 110 to the baffle structure 120. There are L-shaped structures on the baffle structure 120 that are positioned to mate with the top and bottom plates 115 and 110. The top plate 115 is located between an upper L-shape structure and a lower L-shape structure of the baffle structure 120. An aperture is located between the top plate 115 and the upper L-shaped structure of the baffle structure 120. The aperture is adapted to receive a pin which limits movement between the top plate 115 and the baffle structure 120 thereby inhibiting movement of the battery cells 100 within the protective housing.

The top and bottom plates 115 and 110 each comprise a flat plate 160, a stiffener 170, and apertures 180. The apertures 180 are adapted to receive corresponding tension rods that extend between the top and bottom plates 115, 110. The whole thickness of each of the top and bottom plates 115, 110 may be, for example, 3 to 15 millimeters. The thickness of each flat plate 160 may be, for example, 3 to 5 millimeters. The thickness of each stiffener 170 can be, for example, 5 to 10 millimeters. Preembedded bolts on the top and bottom plates 115, 110 are used to connect the top and bottom plates 115, 110 with the baffle structures 120 as well as with the side plates 125. A boss at the inner side of the top plate 110 limits motion of the battery cells 100 along the y-axis. Each side plate 125 has an outline that matches the side openings formed when the top plate 115 and bottom plate 110 are connected with one another.

All of the variations described above in the context of the composition apply as well to the injection molded article. For example, the poly(phenylene ether) can comprise a poly(2,6-dimethyl-1,4-phenylene ether) having an intrinsic viscosity of 0.4 to 0.5 deciliter per gram, measured at 25 °C in chloroform. As another example, the rubber-modified polystyrene can comprise 85 to 95 parts by weight of polystyrene and 5 to 15 parts by weight polybutadiene. As another example, the organophosphate ester comprises triphenyl phosphate, an alkylated triphenyl phosphate, or a combination thereof. As another example, the composition can comprise 5 to 8 weight percent of the glass fibers. As another example, the composition cam consist of the poly(phenylene ether), the rubber-modified polystyrene, the organophosphate ester, and glass fibers, and, optionally, less than or equal to 5 weight percent of an additive selected from the group consisting of stabilizers, mold release agents, lubricants, processing aids, drip retardants, dyes, pigments, antioxidants, mineral oil, metal deactivators, and combinations thereof.

In a very specific embodiment of the injection molded article, the composition consists of the poly(phenylene ether), the rubber-modified polystyrene, the organophosphate ester, and glass fibers, and, optionally, less than or equal to 5 weight percent of an additive selected from the group consisting of stabilizers, mold release agents, lubricants, processing aids, drip retardants, dyes, pigments, antioxidants, mineral oil, metal deactivators, and combinations thereof.

In another very specific embodiment of the injection molded article, the poly(phenylene ether) comprises a poly(2,6-dimethyl-1,4-phenylene ether) having an intrinsic viscosity of 0.4 to 0.5 deciliter per gram, measured at 25 °C in chloroform; the rubber-modified polystyrene comprises 85 to 95 parts by weight of polystyrene and 5 to 15 parts by weight polybutadiene; the organophosphate ester comprises triphenyl phosphate; the glass fibers have a softening point of 600 to 900 °C; and the composition comprises 48 to 54 weight percent of the poly(phenylene ether), 30 to 37 weight percent of the rubber-modified polystyrene, 5 to 10 weight percent of the organophosphate ester, and 5 to 8 weight percent of the glass fibers.

The invention includes at least the following embodiments.
Embodiment 1: A composition comprising: 45 to 55 weight percent of a poly(phenylene ether); 30 to 40 weight percent of a rubber-modified polystyrene comprising 80 to 96 parts by weight of polystyrene and 4 to 20 parts by weight polybutadiene per 100 parts by weight of the rubber-modified polystyrene; 5 to 15 weight percent of an organophosphate ester; and 5 to 10 weight percent glass fibers having a diameter of 5 to 15 micrometers, and a softening point of 600 to 900 °C determined according to ASTM C338-93(2008); wherein all weight percents are based on the total weight of the composition; and wherein the composition excludes organic sulfonates of the formula RSO₃M, wherein R is a C₅-C₂₅ hydrocarbyl, and M is an alkali metal.
Embodiment 2: The composition of embodiment 1, wherein the poly(phenylene ether) comprises a poly(2,6-dimethyl-1,4-phenylene ether) having an intrinsic viscosity of 0.4 to 0.5 deciliter per gram, measured at 25 °C in chloroform.
Embodiment 3: The composition of embodiment 1 or 2, wherein the rubber-modified polystyrene comprises 85 to 95 parts by weight of polystyrene and 5 to 15 parts by weight polybutadiene.
Embodiment 4: The composition of any of embodiments 1-3, wherein the organophosphate ester comprises triphenyl phosphate, an alkylated triphenyl phosphate, or a combination thereof.
Embodiment 5: The composition of any of embodiments 1-4, comprising 5 to 8 weight percent of the glass fibers.
Embodiment 6: The composition of embodiment 1, consisting of the poly(phenylene ether), the rubber-modified polystyrene, the organophosphate ester, and glass fibers, and, optionally, less than or equal to 5 weight percent of an additive selected from the group consisting of stabilizers, mold release agents, lubricants, processing aids, drip retardants, dyes, pigments, antioxidants, mineral oil, metal deactivators, and combinations thereof.
Embodiment 7: The composition of embodiment 1, wherein the poly(phenylene ether) comprises a poly(2,6-dimethyl-1,4-phenylene ether) having an intrinsic viscosity of 0.4 to 0.5 deciliter per gram, measured at 25 °C in chloroform; wherein the rubber-modified polystyrene comprises 85 to 95 parts by weight of polystyrene and 5 to 15 parts by weight polybutadiene; wherein the organophosphate ester comprises triphenyl phosphate; wherein the glass fibers have a softening point of 600 to 900 °C; and wherein the composition comprises 48 to 54 weight percent of the poly(phenylene ether), 30 to 37 weight percent of the rubber-modified polystyrene, 5 to 10 weight percent of the organophosphate ester, and 5 to 8 weight percent of the glass fibers.
Embodiment 8: An injection molded article composition comprising: 45 to 55 weight percent of a poly(phenylene ether); 30 to 40 weight percent of a rubber-modified polystyrene comprising 80 to 96 parts by weight of polystyrene and 4 to 20 parts by weight polybutadiene per 100 parts by weight of the rubber-modified polystyrene; 5 to 15 weight percent of an organophosphate ester; and 5 to 10 weight percent glass fibers having a diameter of 5 to 15 micrometers, and a softening point of 600 to 900 °C determined according to ASTM C338-93(2008); wherein all weight percents are based on the total weight of the composition; and wherein the composition excludes organic sulfonates of the formula RSO₃M, wherein R is a C₅-C₂₅ hydrocarbyl, and M is an alkali metal.
Embodiment 9: The injection molded article of embodiment 8, wherein the article is a component of a protective housing for a battery system of a hybrid or electric vehicle.
Embodiment 10: The injection molded article of embodiment 8 or 9, wherein the poly(phenylene ether) comprises a poly(2,6-dimethyl-1,4-phenylene ether) having an intrinsic viscosity of 0.4 to 0.5 deciliter per gram, measured at 25 °C in chloroform.
Embodiment 11: The injection molded article of any of embodiments 8-10, wherein the rubber-modified polystyrene comprises 85 to 95 parts by weight of polystyrene and 5 to 15 parts by weight polybutadiene.
Embodiment 12: The injection molded article of any of embodiments 8-11, wherein the organophosphate ester comprises triphenyl phosphate, an alkylated triphenyl phosphate, or a combination thereof.
Embodiment 13: The injection molded article of any of embodiments 8-12, comprising 5 to 8 weight percent of the glass fibers.
Embodiment 14: The injection molded article of embodiment 8, wherein the composition consists of the poly(phenylene ether), the rubber-modified polystyrene, the organophosphate ester, and glass fibers, and, optionally, less than or equal to 5 weight percent of an additive selected from the group consisting of stabilizers, mold release agents, lubricants, processing aids, drip retardants, dyes, pigments, antioxidants, mineral oil, metal deactivators, and combinations thereof.
Embodiment 15: The injection molded article of embodiment 8, wherein the article is a component of a protective housing for a battery system of a hybrid or electric vehicle; wherein the poly(phenylene ether) comprises a poly(2,6-dimethyl-1,4-phenylene ether) having an intrinsic viscosity of 0.4 to 0.5 deciliter per gram, measured at 25 °C in chloroform; wherein the rubber-modified polystyrene comprises 85 to 95 parts by weight of polystyrene and 5 to 15 parts by weight polybutadiene; wherein the organophosphate ester comprises triphenyl phosphate; wherein the glass fibers have a softening point of 600 to 900 °C; and wherein the composition comprises 48 to 54 weight percent of the poly(phenylene ether), 30 to 37 weight percent of the rubber-modified polystyrene, 5 to 10 weight percent of the organophosphate ester, and 5 to 8 weight percent of the glass fibers.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES 1-4, COMPARATIVE EXAMPLE 1-3

These examples illustrate that the invention provides improved ductility while maintaining low shrinkage.

Components used to form the compositions are summarized in Table 1.

**Table 1**

| Component | Description |
|---|---|
| PPE | Poly(2,6-dimethyl-1,4-phenylene ether), CAS Reg. No. 24938-67-8, having an intrinsic viscosity of about 0.46 deciliter per gram as measured in chloroform at 25°C; obtained as PPO™ 646 from SABIC Innovative Plastics. |
| HIPS | High-impact polystyrene (rubber-modified polystyrene), CAS Reg. No. 9003-55-8, having a volume average rubber particle diameter of about 2.4 micrometers, a rubber content of about 10 weight percent, a mineral oil content of about 1.5 weight percent, and a swell index of about 17; obtained as NORYL™ HIPS3190 from SABIC Innovative Plastics. |
| TPP | Triphenyl phosphate, CAS Reg. No. 115-86-6; obtained from Supresta. |
| Glass fiber | Chopped glass fibers having a diameter of about 12-15 micrometers, a pre-compounded length of about 2-5 millimeters, and a surface treatment for compatibility with modified poly(phenylene ether); obtained as ECS306 from Chongqing Polycomp International Corp. |
| TSAN | Poly(styrene-acrylonitrile)-encapsulated polytetrafluoroethylene, containing 50 weight percent polytetrafluoroethylene; obtained as CYCOLAC™ INP449 from SABIC Innovative Plastics. |
| Carbon black | Carbon black (pigment); pH = 7.85; heating loss = 1.87 weight percent; sulfur = 0.45 weight percent; iodine absorption = 230.8 grams/kilogram; toluene discoloration number = 99.5 percent transmittance; solvent extractables = 0.01 weight percent; volatile constituents = 1.85 weight percent; obtained as MONARCH™ 800 from Cabot Corp. |

Component amounts are provided in Table 2, where they are expressed in units of weight percent based on the total weight of the composition. Compositions were compounded in a twin-screw extruder using barrel temperatures of about 260 °C, a screw rotation rate of 300 rotations per minute, and a throughput of about 16 kilograms per hour (about 35 pounds per hour). All components were fed into the extruder feed throat except the glass fiber, which was fed downstream via a separate feeder. Test articles for property measurements were injection molded using a barrel temperature of 260 °C and a mold temperature of 65 °C.

Injection molded test articles were tested according to ISO protocols. Flexural property values were determined according to ISO 178, fourth edition, 2004-05-15; modulus, strength, and stress values are expressed in units of megapascals, and strain values are expressed in units of percent Heat deflection temperature values, expressed in units of degrees centigrade, were determined according to ISO 75-1, second edition, 2004-05-15. Izod pendulum impact resistance values, expressed in units of kilojoules per meter-squared, were determined according to ISO 180, third edition, 2000-12-15. Multiaxial impact property values were determined according to ISO 6603-2000; energies are express in units of joules, and loads are expressed in units of kilonewtons. Tensile property values were determined according to ISO 527-1; modulus and stress values are expressed in units of megapascals, and strain values are expressed in units of percent. Mold shrinkage property values, expressed in units of percent, were determined according to ASTM D 955-08 using an injection mold with a bar cavity of dimensions 12.7 millimeters by 127 millimeters by 3.2 millimeter thickness; shrinkage was determined twenty-four hours after demolding by comparing the dimension of the sample with the dimension of the mold, where "parallel" shrinkage corresponds to the 127 millimeter dimension of the mold, and the "perpendicular" shrinkage corresponds to the 12.7 millimeter dimension of the mold. Shrinkage is calculated as 100 × [(mold dimension) - (sample dimension)]/(mold dimension).

In Table 2, "C. Ex. 1" is a comparative example corresponding to a commercially available product that has been used for molding battery protective housing parts with molded-in metal bosses. The Table 2 results show that relative to Comparative Example 1, inventive Examples 1-6 exhibit modestly improved (increased) values of flexural strain at maximum strength and flexural strain at break, and Examples 1-5 exhibit modestly improved (increased) values of tensile elongation at break.

The Comparative Example 1 and Example 1 composition were compared in a test in which a protective battery housing enclosing an iron weight is dropped from a predetermined height onto a hard (iron) surface, then assessed for impact-related damage. The protective battery housing consisted of a cover and a base, each having a part thickness of 3 millimeters. The assembled protective battery housing had a rectangular prism shape with slightly rounded edges and corners and external dimensions of 19 centimeters × 18 centimeters × 4.5 centimeters. The total mass of the protective battery housing was 550 grams, and the mass of the enclosed iron weight was 13.6 kilograms. Two drop tests were conducted at ambient temperature (about 23 °C). In the "drop on bottom" test, the protective battery housing-enclosed iron weight was suspended such that the two 19 centimeters × 18 centimeters surfaces of the protective battery housing were on the top and bottom of the suspended module (parallel to the ground), with the center of the module suspended 1.4 meters above the hard surface. In the "drop on side" test, the protective battery housing-enclosed iron weight was suspended such that the two 19 centimeters × 18 centimeters surfaces of the protective battery housing were on the sides the suspended module (perpendicular to the ground), with the center of the module suspended 1.35 meters above the hard surface. In these tests, internal ribs are more vulnerable to cracking than external walls. In both the "drop on bottom" test and the "drop on side" test, a protective battery housing-enclosed iron weight including a battery protective housing molded from the Comparative Example 1 composition exhibited rib cracks and slight cracks on the edge of the top cover. In the "drop on bottom" test, a protective battery housing-enclosed iron weight including a battery protective housing molded from the Example 1 composition exhibited no cracks and a slight indentation on the base. In the "drop on side" test, a battery module including a battery protective housing molded from the Example 1 composition exhibited rib cracks and a slight indentation on the base. The results for the battery protective housing molded from the Example 1 composition are superior to those for the housing molded from Comparative Example 1, in that the housing molded from the Example 1 composition exhibited no cracks in the external walls, while the housing molded from Comparative Example 1 exhibited cracks on the edge of the top cover.

**Table 2**

| | C. Ex. 1 | Ex. 1 | Ex. 2 | Ex. 3 | Ex. 4 | Ex. 5 | Ex. 6 |
|---|---|---|---|---|---|---|---|
| COMPOSITIONS | | | | | | | |
| PPE | 54.70 | 52.19 | 51.58 | 50.98 | 54.70 | 54.06 | 53.43 |
| HIPS | 28.24 | 33.73 | 33.34 | 32.95 | 31.23 | 30.86 | 30.50 |
| Glass fiber | 9.95 | 6.96 | 7.96 | 8.96 | 6.96 | 7.96 | 8.96 |
| TPP | 6.46 | 6.46 | 6.46 | 6.46 | 6.46 | 6.46 | 6.46 |
| TSAN | 0.15 | 0.15 | 0.15 | 0.15 | 0.15 | 0.15 | 0.15 |
| Carbon black | 0.50 | 0.50 | 0.50 | 0.50 | 0.50 | 0.50 | 0.50 |

| PROPERTIES | | | | | | | |
|---|---|---|---|---|---|---|---|
| Flexural modulus (MPa) | 4400 | 3790 | 4080 | 4200 | 4000 | 4160 | 4220 |
| change vs. C. Ex. 1 (%) | -- | -13.9 | -7.4 | -4.6 | -9.2 | -5.5 | -4.1 |
| Flexural strength (MPa) | 143 | 128 | 129 | 134 | 130 | 133 | 134 |
| change vs. C. Ex. 1 (%) | -- | -10.1 | -9.6 | -6.0 | -8.6 | -6.9 | -6.3 |
| Flexural stress at break (MPa) | 143 | 127 | 128 | 134 | 129 | 132 | 134 |
| change vs. C. Ex. 1 (%) | -- | -10.7 | -10.5 | -6.0 | -9.6 | -7.1 | -6.4 |
| Flexural strain at max. strength (%) | 4.4 | 5.0 | 4.7 | 4.5 | 4.7 | 4.5 | 4.4 |
| change vs. C. Ex. 1 (%) | -- | 12.0 | 6.3 | 1.8 | 5.6 | 0.7 | -1.8 |
| Flexural strain at break (%) | 4.5 | 5.7 | 5.0 | 4.6 | 5.5 | 4.8 | 4.5 |
| change vs. C. Ex. 1 (%) | -- | 25.4 | 10.4 | 1.8 | 22.3 | 4.9 | -1.5 |
| Flexural stress at 3.5 strain (MPa) | 133 | 116 | 121 | 125 | 121 | 125 | 127 |
| change vs. C. Ex. 1 (%) | -- | -12.5 | -9.0 | -6.0 | -9.0 | -6.3 | -4.9 |
| Heat deflection temp. (°C) | 136 | 128 | 123 | 126 | 126 | 126 | 127 |
| change vs. C. Ex. 1 (%) | -- | -6.0 | -9.8 | -7.5 | -7.2 | -7.3 | -6.4 |
| Notched Izod, 23°C (kJ/m²) | 8.1 | 8.5 | 8.5 | 8.5 | 8.3 | 8.2 | 8.7 |
| change vs. C. Ex. 1 (%) | -- | 5.0 | 5.2 | 4.6 | 2.2 | 2.0 | 7.5 |
| Unnotched Izod, 23°C (kJ/m²) | 29 | 30 | 28 | 31 | 28 | 28 | 30 |
| change vs. C. Ex. 1 (%) | -- | 4.1 | -2.1 | 6.4 | -1.5 | -1.6 | 5.7 |
| Notched Izod, -30°C (kJ/m²) | 7.3 | 7.3 | 7.5 | 7.7 | 7.2 | 7.4 | 7.7 |
| change vs. C. Ex. 1 (%) | -- | -0.5 | 2.3 | 4.8 | -1.4 | 1.2 | 4.9 |
| Unnotched Izod, -30°C (kJ/m²) | 34 | 31 | 32 | 33 | 33 | 34 | 33 |
| change vs. C. Ex. 1 (%) | -- | -8.2 | -3.7 | -2.9 | -2.0 | 1.7 | -1.2 |
| MAI energy to max. load, 23°C (J) | 10.9 | 11.2 | 9.92 | 10.2 | 11.3 | 11 | 10.6 |
| change vs. C. Ex. 1 (%) | -- | 2.8 | -9.0 | -6.4 | 3.7 | 0.9 | -2.8 |
| MAI energy to failure, 23°C (J) | 17.1 | 17.9 | 16.6 | 15.4 | 18.8 | 17.8 | 18.4 |
| change vs. C. Ex. 1 (%) | -- | 4.7 | -2.9 | -9.9 | 9.9 | 4.1 | 7.6 |
| MAI total energy, 23°C | 17.2 | 18.1 | 16.8 | 15.5 | 18.9 | 17.9 | 18.5 |
| change vs. C. Ex. 1 (%) | -- | 5.2 | -2.3 | -9.9 | 9.9 | 4.1 | 7.6 |
| MAI max. load, 23°C (kN) | 1.2 | 1.1 | 1.1 | 1.1 | 1.1 | 1.1 | 1.2 |
| change vs. C. Ex. 1 (%) | -- | -9.1 | -5.8 | -8.3 | -11.6 | -8.3 | -3.3 |
| MAI energy to max. load, -30°C (J) | 12 | 13 | 12 | 11 | 11 | 12 | 13 |
| change vs. C. Ex. 1 (%) | -- | 7.8 | 2.6 | -1.7 | -6.9 | 1.7 | 7.8 |
| MAI energy to failure, -30°C (J) | 14 | 18 | 18 | 13 | 14 | 16 | 16 |
| change vs. C. Ex. 1 (%) | -- | 32.1 | 31.4 | -2.2 | -1.5 | 17.5 | 15.3 |
| MAI total energy, -30°C | 14 | 18 | 18 | 13 | 14 | 16 | 16 |
| change vs. C. Ex. 1 (%) | -- | 32.8 | 32.1 | -2.2 | -0.7 | 19.0 | 15.3 |
| MAI max. load, -30°C (kN) | 1.2 | 1.1 | 1.1 | 1.2 | 1.1 | 1.1 | 1.2 |
| change vs. C. Ex. 1 (%) | -- | -7.6 | -5.9 | 0.0 | -5.0 | -5.0 | -0.8 |
| Mold shrinkage, parallel (%) | 0.63 | 0.63 | 0.61 | 0.60 | 0.66 | 0.65 | 0.64 |
| change vs. C. Ex. 1 (%) | -- | 1.2 | -2.0 | -3.9 | 5.9 | 3.9 | 1.6 |
| Mold shrinkage, perpendicular (%) | 0.50 | 0.48 | 0.44 | 0.42 | 0.48 | 0.48 | 0.46 |
| change vs. C. Ex. 1 (%) | -- | -3.9 | -11.8 | -15.8 | -4.4 | -4.9 | -7.9 |
| Tensile modulus, 23°C (MPa) | 4450 | 3980 | 4130 | 4300 | 3920 | 4170 | 4320 |
| change vs. C. Ex. 1 (%) | -- | -10.5 | -7.0 | -3.4 | -11.7 | -6.2 | -2.8 |
| Tensile stress at yield, 23°C (MPa) | 82 | 71 | 72 | 76 | 71 | 75 | 76 |
| change vs. C. Ex. 1 (%) | -- | -13.4 | -11.7 | -8.0 | -13.0 | -9.0 | -7.0 |
| Tensile stress at break, 23°C (MPa) | 79 | 67 | 67 | 72 | 66 | 71 | 74 |
| change vs. C. Ex. 1 (%) | -- | -15.7 | -15.0 | -9.4 | -16.4 | -10.4 | -6.8 |
| Tensile strain at yield, 23°C (%) | 3.1 | 3.2 | 3.1 | 3.1 | 3.3 | 3.1 | 3.1 |
| change vs. C. Ex. 1 (%) | -- | 3.6 | -0.3 | -0.3 | 5.2 | 0.3 | -0.6 |
| Tensile strain at break, 23°C (%) | 3.6 | 4.9 | 4.2 | 3.9 | 5.2 | 4.0 | 3.6 |
| change vs. C. Ex. 1 (%) | -- | 37.2 | 18.4 | 9.8 | 46.4 | 12.0 | 0.0 |

## Claims

1. An injection molded component (110, 115, 120, 125) of a protective housing for a battery system of a hybrid or electric vehicle, wherein the injection molded component comprises a composition comprising:
45 to 55 weight percent of a poly(phenylene ether);
30 to 40 weight percent of a rubber-modified polystyrene comprising 80 to 96 parts by weight of polystyrene and 4 to 20 parts by weight polybutadiene per 100 parts by weight of the rubber-modified polystyrene;
5 to 15 weight percent of an organophosphate ester; and
5 to 10 weight percent glass fibers having a diameter of 5 to 15 micrometers, and a softening point of 600 to 900 °C determined according to ASTM C338-93(2008);
wherein all weight percents are based on the total weight of the composition; and wherein the composition excludes organic sulfonates of the formula RSO₃M, wherein R is a C₅-C₂₅ hydrocarbyl, and M is an alkali metal.

2. The injection molded component of claim 1, wherein the poly(phenylene ether) comprises a poly(2,6-dimethyl-1,4-phenylene ether) having an intrinsic viscosity of 0.4 to 0.5 deciliter per gram, measured at 25 °C in chloroform.

3. The injection molded component of claim 1 or 2, wherein the rubber-modified polystyrene comprises 85 to 95 parts by weight of polystyrene and 5 to 15 parts by weight polybutadiene.

4. The injection molded component of any one of claims 1 to 3, wherein the organophosphate ester comprises triphenyl phosphate, an alkylated triphenyl phosphate, or a combination thereof.

5. The injection molded component of any of claims 1 to 4, comprising 5 to 8 weight percent of the glass fibers.

6. The injection molded component of claim 1, wherein the composition consists of the poly(phenylene ether), the rubber-modified polystyrene, the organophosphate ester, and glass fibers, and, optionally, less than or equal to 5 weight percent of an additive selected from the group consisting of stabilizers, mold release agents, lubricants, processing aids, drip retardants, dyes, pigments, antioxidants, mineral oil, metal deactivators, and combinations thereof.

7. The injection molded component of claim 1,
wherein the poly(phenylene ether) comprises a poly(2,6-dimethyl-1,4-phenylene ether) having an intrinsic viscosity of 0.4 to 0.5 deciliter per gram, measured at 25 °C in chloroform;
wherein the rubber-modified polystyrene comprises 85 to 95 parts by weight of polystyrene and 5 to 15 parts by weight polybutadiene;
wherein the organophosphate ester comprises triphenyl phosphate; and
wherein the composition comprises
48 to 54 weight percent of the poly(phenylene ether),
30 to 37 weight percent of the rubber-modified polystyrene,
5 to 10 weight percent of the organophosphate ester, and
5 to 8 weight percent of the glass fibers.

## Patentansprüche

1. Spritzgusskomponente (110, 115, 120, 125) eines Schutzgehäuses für ein Batteriesystem eines Hybrid- oder Elektrofahrzeugs, wobei die Spritzgusskomponente eine Zusammensetzung umfasst, welche umfasst:
45 bis 55 Gewichtsprozent eines Poly(phenylenether)s;
30 bis 40 Gewichtsprozent eines kautschukmodifizierten Polystyrols umfassend
80 bis 96 Gewichtsteile Polystyrol und 4 bis 20 Gewichtsteile Polybutadien auf
100 Gewichtsteile des kautschukmodifizierten Polystyrols;
5 bis 15 Gewichtsprozent eines Organophosphatesters; und
5 bis 10 Gewichtsprozent Glasfasern mit einem Durchmesser von 5 bis 15 Mikrometer und einem Erweichungspunkt von 600 bis 900 °C bestimmt gemäß ASTM C338-93(2008);
wobei alle Gewichtsprozente auf das Gesamtgewicht der Zusammensetzung bezogen sind; und wobei die Zusammensetzung organische Sulfonate der Formel RSO₃M ausschließt, wobei R ein C₅-C₂₅-Hydrocarbyl ist und M ein Alkalimetall ist.

2. Spritzgusskomponente nach Anspruch 1, wobei der Poly(phenylenether) einen Po|y(2,6-dimethyl-1,4-phenylenether) mit einer intrinsischen Viskosität bzw. Strukturviskosität von 0,4 bis 0,5 Deziliter pro Gramm, gemessen bei 25 °C in Chloroform, umfasst.

3. Spritzgusskomponente nach Anspruch 1 oder 2, wobei das kautschukmodifizierten Polystyrol 85 bis 95 Gewichtsteile Polystyrol und 5 bis 15 Gewichtsteile Polybutadien umfasst.

4. Spritzgusskomponente nach irgendeinem der Ansprüche 1 bis 3, wobei der Organophosphatester Triphenylphosphat, ein alkyliertes Triphenylphosphat, oder eine Kombination davon umfasst.

5. Spritzgusskomponente nach irgendeinem der Ansprüche 1 bis 4, umfassend 5 bis 8 Gewichtsprozent Glasfasern.

6. Spritzgusskomponente nach Anspruch 1, wobei die Zusammensetzung aus dem Poly(phenylenether), dem kautschukmodifizierten Polystyrol, dem Organophosphatester und Glasfasern, und gegebenenfalls weniger als oder gleich 5 Gewichtsprozent eines Additivs ausgewählt aus der Gruppe bestehend aus Stabilisatoren, Formtrennmitteln, Schmiermitteln bzw. Gleitmitteln, Verarbeitungshilfsstoffen, Tropfverzögerungsmitteln, Farbstoffen, Pigmenten, Antioxidationsmitteln, Mineralöl, Metalldeaktivatoren, und Kombinationen davon besteht.

7. Spritzgusskomponente nach Anspruch 1,
wobei der Poly(phenylenether) einen Poly(2,6-dimethyl-1,4-phenylenether) mit einer intrinsischen Viskosität bzw. Strukturviskosität von 0,4 bis 0,5 Deziliter pro Gramm, gemessen bei 25 °C in Chloroform, umfasst;
wobei das kautschukmodifizierte Polystyrol 85 bis 95 Gewichtsteile Polystyrol und 5 bis 15 Gewichtsteile Polybutadien umfasst;
wobei der Organophosphatester Triphenylphosphat umfasst; und
wobei die Zusammensetzung
48 bis 54 Gewichtsprozent des Poly(phenylenether)s,
30 bis 37 Gewichtsprozent des kautschukmodifizierten Polystyrols,
5 bis 10 Gewichtsprozent des Organophosphatesters, und
5 bis 8 Gewichtsprozent der Glasfasern umfasst.

## Revendications

1. Composant moulé par injection (110, 115, 120, 125) d'un boitier de protection destiné à un système de batterie d'un véhicule hybride ou électrique, le composant moulé par injection comprenant une composition qui comprend :
45 à 55 pourcents en poids d'un poly(phénylène éther) ;
30 à 40 pourcents en poids d'un polystyrène modifié par un caoutchouc, comprenant 80 à 96 parties en poids de polystyrène et 4 à 20 parties en poids de polybutadiène pour 100 parties en poids du polystyrène modifié par un caoutchouc ;
5 à 15 pourcents en poids d'un ester organophosphate ; et
5 à 10 pourcents en poids de fibres de verre ayant un diamètre de 5 à 15 micromètres et un point de ramollissement de 600 à 900 °C, déterminé selon ASTM C338-93 (2008) ;
tous les pourcentages en poids étant rapportés au poids total de la composition ; et la composition ne contenant pas de sulfonates organiques de formule RSO₃M dans laquelle R est un radical hydrocarbyle en C₅-C₂₅ et M est un métal alcalin.

2. Composant moulé par injection selon la revendication 1, dans lequel le poly(phénylène éther) comprend un poly(2,6-diméthyl-1,4-phénylène éther) ayant une viscosité intrinsèque de 0,4 à 0,5 décilitre par gramme, mesurée à 25 °C dans le chloroforme.

3. Composant moulé par injection selon la revendication 1 ou 2, dans lequel le polystyrène modifié par un caoutchouc comprend 85 à 95 parties en poids de polystyrène et 5 à 15 parties en poids de polybutadiène.

4. Composant moulé par injection selon l'une des revendications 1 à 3, dans lequel l'ester organophosphate comprend le phosphate de triphényle, un phosphate de triphényle alkylé ou une combinaison de ceux-ci.

5. Composant moulé par injection selon l'une des revendications 1 à 4, comprenant 5 à 8 pourcents en poids de fibres de verre.

6. Composant moulé par injection selon la revendication 1, dans lequel la composition est constituée par le poly(phénylène éther), le polystyrène modifié par un caoutchouc, l'ester organophosphate et les fibres de verre, et éventuellement une quantité inférieure ou égale à 5 pourcents en poids d'un additif choisi dans le groupe constitué par les stabilisants, les agents de démoulage, les lubrifiants, les auxiliaires de mise en oeuvre, les retardateurs de goutte, les colorants, les pigments, les antioxydants, une huile minérale, les désactivateurs de métaux et les combinaisons de ceux-ci.

7. Composant moulé par injection selon la revendication 1,
dans lequel le poly(phénylène éther) comprend un poly(2,6-diméthyl-1,4-phénylène éther) ayant une viscosité intrinsèque de 0,4 à 0,5 décilitre par gramme, mesurée à 25 °C dans le chloroforme ;
dans lequel le polystyrène modifié par un caoutchouc comprend 85 à 95 parties en poids de polystyrène et 5 à 15 parties en poids de polybutadiène ;
dans lequel l'ester organophosphate comprend du phosphate de triphényle ; et
dans lequel la composition comprend :
48 à 54 pourcents en poids du poly(phénylène éther),
30 à 37 pourcents en poids du polystyrène modifié par un caoutchouc,
5 à 10 pourcents en poids de l'ester organophosphate, et
5 à 8 pourcents en poids des fibres de verre.
